# EUROPÄISCHE PATENTSCHRIFT

(11) **EP 1 180 293 B1**
(45) Veröffentlichungstag und Bekanntmachung des Hinweises auf die Patenterteilung: **01.12.2004**
(21) Anmeldenummer: 00931010.3
(22) Anmeldetag: 05.04.2000
(51) Int. Cl.: H04L 29/06

(54) **VERFAHREN UND ANORDNUNG ZUM BEARBEITEN EINES GESAMTDATENSTROMS MIT DATENPAKETEN**
METHOD AND SYSTEM FOR PROCESSING A GLOBAL DATA STREAM WITH DATA FRAMES
PROCEDE ET DISPOSITIF POUR TRAITER UN FLUX GLOBAL DE DONNEES COMPRENANT DES PAQUETS DE DONNEES

(30) Priorität: 03.05.1999 DE 19920205
(43) Veröffentlichungstag der Anmeldung: 20.02.2002
(73) Patentinhaber: SIEMENS AKTIENGESELLSCHAFT, 80333 München (DE)
(72) Erfinder: WIMMER, Bernhard, D-81373 München (DE)
(86) Internationale Anmeldenummer: PCT/DE2000/001050
(87) Internationale Veröffentlichungsnummer: WO 2000/067437

(56) Entgegenhaltungen:
- EP-A- 0 986 228
- WO-A-98/21846
- BASSIL J: "MULTIMEDIA OVER MOBILE NETWORKS USING THE H324 FAMILY" IEE COLLOQUIUM ON THE FUTURE OF MOBILE MULTIMEDIA COMMUNICATIONS, 1996, XP000919344
- FAERBER N ET AL: "EXTENSIONS OF ITU-T RECOMMENDATION H.324 FOR ERROR-RESILIENT VIDEO TRANSMISSION" IEEE COMMUNICATIONS MAGAZINE,US,IEEE SERVICE CENTER. PISCATAWAY, N.J, Bd. 36, Nr. 6, 1. Juni 1998 (1998-06-01), Seiten 120-128, XP000777794 ISSN: 0163-6804 in der Anmeldung erwähnt

## Beschreibung

### Technischer Hintergrund

Im Bereich Multimedia gilt es, verschiedene Arten digitaler Datenströme in irgendeiner Form gemeinsam zu übertragen, wobei sie für die Übertragung entsprechend bearbeitet werden müssen.

Unter digitalen Datenströmen sind im weiteren z. B. folgende keineswegs abschließend zu verstehende Arten digitaler Daten zu verstehen, die üblicherweise in Datenpaketen vorgebbarer Größe, d.h. mit einer vorgebbaren Zahl von Bytes, verarbeitet werden:
- digitale Daten, mit denen Text beschrieben wird, z. B. eine Text-Datei,
- Audiodaten,
- Videodaten.

Aus Dokument [1] sind ein Verfahren und eine Anordnung zur Bearbeitung eines digitalen Datenstroms gemäß dem Standard ITU-T H.324 bekannt.

Der Standart ITU-H.324 ist ebenfalls aus dem Dokument [1] bekannt.

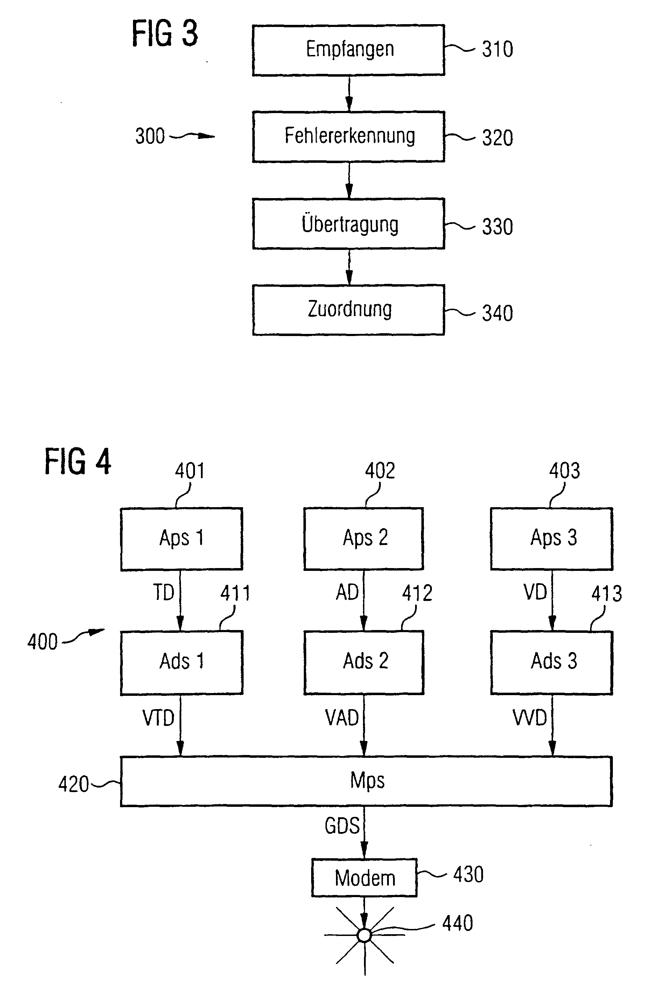

In **Fig.4** ist der Aufbau einer Anordnung zur Übertragung eines digitalen Datenstroms, wie sie aus dem Dokument [1] bekannt ist, symbolhaft dargestellt und wird im folgenden kurz erläutert.

**Fig.4** zeigt sogenannte Applikationsschichten 401, 402 und 403. Ein möglicher Aufbau der Applikationsschichten ist in [2] beschrieben. Im Rahmen der Übertragung eines digitalen Datenstroms sind die Applikationsschichten 401, 402 und 403 lediglich symbolhaft als Mittel zu verstehen, mit denen jeweils ein Datenstrom, üblicherweise in Datenpaketen vorgebbarer Größe einer im weiteren beschriebenen Adaptionsschicht zugeführt wird.

Allgemein gilt das Prinzip, daß verschiedene Applikationsschichten verschiedenartige Datenströme, beispielsweise einen Videodatenstrom VD, einen Audiodatenstrom AD oder einen Textdatenstrom, der entsprechenden Adaptionsschicht zuführen.

**Fig.4** zeigt die Adaptionsschicht 401, die den Textdatenstrom TD der Adaptionsschicht 411 zuführt, die Applikationsschicht 402, die den Audiodatenstrom AD der Adaptionsschicht 412 zuführt, und die Applikationsschicht 403, die den Videodatenstrom VD der Adaptionsschicht 413 zuführt.

Eine Adaptionsschicht ist als Mittel zu verstehen, mit dem eine Maßnahme zur Fehlererkennung und/oder Fehlerkorrektur durchführbar ist.

Unter einer Maßnahme zur Fehlererkennung und/oder Fehlerkorrektur ist im weiteren ein Verfahren zu verstehen, mit dem es möglich ist, aufgetretene Fehler bei der Übertragung eines Datenstroms zu erkennen und/oder zu korrigieren.

Ebenfalls aus [1] sind verschiedene Prinzipien von Maßnahmen zur Fehlererkennung und/oder Fehlerkorrektur bekannt, z. B. sogenannte Wiederholungs-Anforderungs-Verfahren (Automatic Repeat Request Verfahren, ARQ Typ I, ARQ Typ II) oder auch sogenannte Verfahren zur Vorwärtsfehlerkorrektur. Im Rahmen der Verfahren zur Vorwärtsfehlerkorrektur wird unterschieden zwischen fehlererkennenden und fehlerkorrigierenden Verfahren.

Die in den jeweiligen Adaptionsschichten 411,412 und 413 fehlerbehandelten Datenströme VDT, VAD und VVD werden einer Multiplexschicht 420 zugeführt. Die Multiplexschicht 420 ist als Mittel zu verstehen, mit dem die zugeführten Datenströme VDT, VAD und VVD zu einem Gesamtdatenstrom GDS gruppiert werden.

Unter Verwendung eines Modems V 34/V.8 430 wird der Gesamtdatenstrom derart weiterbearbeitet, daß der bearbeitete Gesamtdatenstrom in einem Netzwerk 440 übertragbar ist.

Aus [3] ein Videokompressionsverfahren bekannt.

Aus [4] ist ein Verfahren zum Bearbeiten eines Gesamtdatenstroms mit Datenpaketen eines ersten Datenstroms und Datenpakten eines zweiten Datenstroms bekannt, bei dem die Datenpakete jeweils ein Fehlererkennungsfeld aufweisen und bei dem der Gesamtdatenstrom von einer ersten Schicht empfangen wird.

Die bekannten Anordnungen und Verfahren weisen insbesondere den Nachteil auf, daß eine Zuordnung von zusammengehörigen Datenpaketen verschiedener Datenströme, welche Datenströme übertragen wurden, zueinander ohne eine grundlegende Änderung des Übertragungsverfahren nicht möglich ist.

### Kurzbeschreibung der Erfindung

Der Erfindung liegt das Problem zugrunde, ein Verfahren und eine Anordnung zum Bearbeiten eines Datenstroms mit Datenpaketen anzugeben, mit denen eine Zuordnung von zusammengehörigen Datenpaketen verschiedener Datenströme möglich ist ohne dem oben beschriebenen Nachteil der bekannten Anordnungen und Verfahren zu unterliegen.

Das Problem wird durch die Verfahren sowie die Anordnungen mit den Merkmalen gemäß den unabhängigen Ansprüchen gelöst.

Bei dem Verfahren zum Bearbeiten eines Datenstroms mit Datenpaketen eines ersten Datenstroms und Datenpaketen eines zweiten Datenstroms, welche Datenpakete jeweils ein Fehlererkennungsfeld aufweisen, wird der Gesamtdatenstrom von einer ersten Schicht empfangen. In der ersten Schicht wird der empfangene Gesamtdatenstrom derart bearbeitet wird, daß unter Verwendung jeweils eines Fehlererkennungsfeldes eines Datenpakets eine Fehlererkennung für das Datenpaket durchgeführt wird. Von der ersten Schicht wird eine Information über ein Fehlererkennungsfeld eines Datenpakets des bearbeiteten Gesamtdatenstroms und zumindest ein Teil des bearbeiteten Gesamtdatenstroms an eine zweite Schicht übertragen. In der zweiten Schicht werden unter Verwendung der Informationen über das Fehlererkennungsfeld die Datenpakete des übertragenen Teils des Gesamtdatenstroms dem ersten Datenstrom und dem zweiten Datenstrom zugeordnet.

Die Anordnung zum Bearbeiten eines Gesamtdatenstroms mit Datenpaketen eines ersten Datenstroms und Datenpaketen eines zweiten Datenstroms, welche Datenpakete jeweils ein Fehlererkennungsfeld aufweisen, weist eine erste Schicht auf, welche den Gesamtdatenstrom empfängt und mit welcher der empfangene Gesamtdatenstrom derart bearbeitbar ist, daß unter Verwendung jeweils eines Fehlererkennungsfeldes eines Datenpakets eine Fehlererkennung für das Datenpaket durchführbar ist. Bei der Anordnung sind von der ersten Schicht eine Information über ein Fehlererkennungsfeld eines Datenpakets des bearbeiteten Gesamtdatenstroms und zumindest ein Teil des bearbeiteten Gesamtdatenstroms an eine zweite Schicht übertragbar. Mit der zweiten Schicht sind unter Verwendung der Informationen über das Fehlererkennungsfeld die Datenpakete des übertragenen Teils des Gesamtdatenstroms dem ersten Datenstrom und dem zweiten Datenstrom zuordnbar.

Die Erfindung weist insbesondere den Vorteil auf, daß für die Übertragung des Gesamtdatenstrom bekannte Datenübertragungsverfahren ohne größere Modifikationen verwendet werden können.

Bevorzugte Weiterbildungen der Erfindung ergeben sich aus den abhängigen Ansprüchen.

Die im weiteren beschriebenen Weiterbildungen beziehen sich sowohl auf das Verfahren und die Anordnung.

Bevorzugt wird der Gesamtdatenstrom unter Verwendung eines Verfahrens, das Merkmale eines ITU-T H.324-Verfahrens aufweist, übertragen.

In einer Weiterbildung ist die Information über ein Fehlererkennungsfeld das Fehlererkennungsfeld selbst.

Eine besonders einfache Zuordnung ist möglich, wenn ein Fehlererkennungsfeld jeweils eine Sequenzfolgenummer aufweist.

In einer Weiterbildung weisen mehrere Datenpakete die gleiche Sequenzfolgenummer auf. Die Datenpakete mit jeweils der gleichen Sequenzfolgenummer werden gruppiert.

Im Bereich Multimedia umfassen der erste und der zweite Datenstrom jeweils zumindest einen Teil folgender Arten von Daten:
- Videodaten
- Audiodaten
- Textdaten.

Eine Datenübertragung wird dadurch vereinfacht, daß der erste Datenstrom und der zweite Datenstrom die gleiche Art von Daten aufweisen.

### Kurzbeschreibung der Figuren

In Figuren ist ein Ausführungsbeispiel der Erfindung dargestellt, welches im weiteren näher erläutert wird.

Es zeigen
- Figur 1: eine Skizze mit zwei Anordnungen, in der symbolisch die Übertragung und Verarbeitung verschiedener Datenströme beschrieben ist;
- Figur 2: eine Skizze, in der eine Anordnung gemäß dem Ausführungsbeispiel skizziert ist, mit der eine Bearbeitung von Datenpaketen im Rahmen einer Datenübertragung erfolgt;
- Figur 3: ein Ablaufdiagramm, in dem einzelne Verfahrensschritte zum Bearbeiten von Datenpaketen gemäß dem Ausführungsbeispiel dargestellt sind;
- Figur 4: eine Skizze mit einer Anordnung, mit der Datenpakete gemäß dem Standard ITU-T H.324 übertragbar sind;
- Figur 5: eine Skizze, in der eine Anordnung gemäß dem Ausführungsbeispiel skizziert ist, mit der eine Bearbeitung von Datenpaketen im Rahmen einer Datenübertragung erfolgt.

### Figurenbeschreibung

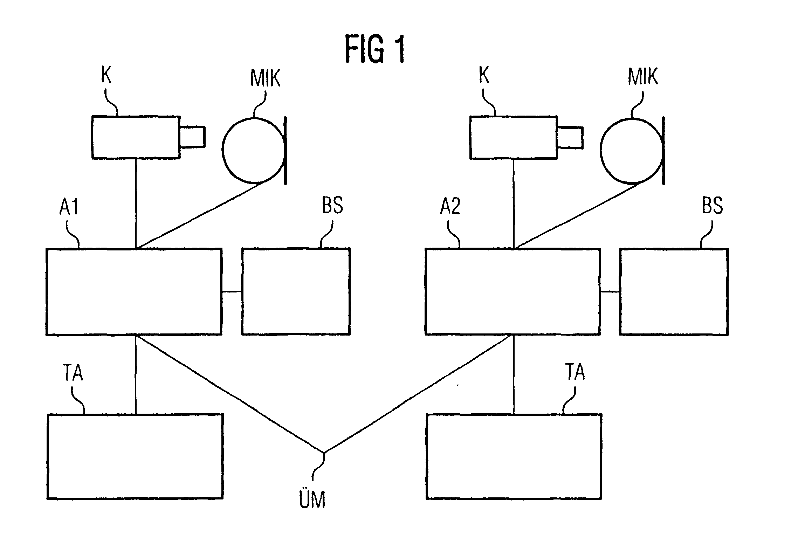

In **Fig.1** sind eine erste Anordnung A1 und eine zweite Anordnung A2 dargestellt. Ferner ist für jede Anordnung A1, A2 symbolhaft eine mit der jeweiligen Anordnung A1, A2 gekoppelte Kamera K, ein Mikrophon MIK, ein Bildschirm BS sowie eine Tastatur TA dargestellt. Die erste Anordnung A1 und die zweite Anordnung A2 sind über ein beliebiges Übertragungsmedium ÜM zur Übertragung von Daten miteinander gekoppelt.

Mit der Kamera K wird eine beliebige Folge von Bildern aufgenommen, digitalisiert und der jeweiligen Anordnung A1, A2 zugeführt. In den Anordnungen A1 und A2 werden jeweils die zugeführten digitalisierten Bilder einer Videokompression unterzogen. Das Videokompressionsverfahren ist in [3] beschrieben.

Im Rahmen des bekannten Videokompressionsverfahrens wird ein digitalisiertes Bild derart weiterbearbeitet, daß aus dem digitalisierten Bild ein Grundbild (Vordergrundbild), welches Bilddaten eines Vordergrunds des digitalisierten Bildes aufweist, und ein zugehöriges Zusatzbild (Hintergrund), welches Bilddaten eines Hintergrunds des digitalisierten Bildes aufweist, erzeugt wird. Für die Folge von Bildern werden somit digitalisierte Grundbilddaten und zugehörige digitalisierte Zusatzbilddaten erzeugt.

Die im folgenden beschriebene Weiterverarbeitung der digitalen Bilddaten gewährleistet, daß nach einer Übertragung der Bilddaten, bei welcher die digitalisierten Grunddaten und die digitalisierten Zusatzdaten übertragen werden, eine Zuordnung eines zugehörigen Zusatzbildes zu dem zugehörigen Grundbild gemäß der Zuordnung des Zusatzbildes zu dem Grundbild vor der Übertragung möglich ist.

Mit dem Mikrophon MIK werden beispielsweise beliebige Audiodaten aufgenommen, digitalisiert und der jeweiligen Anordnung A1, A2 zugeführt und dort gespeichert.

Digitale Daten können weiterhin beispielsweise auch manuell durch einen Benutzer über die Tastatur TA in die jeweilige Anordnung A1, A2 eingegeben werden und dort gespeichert werden.

Die digitalen Daten werden im weiteren als digitale Datenströme DS bezeichnet.

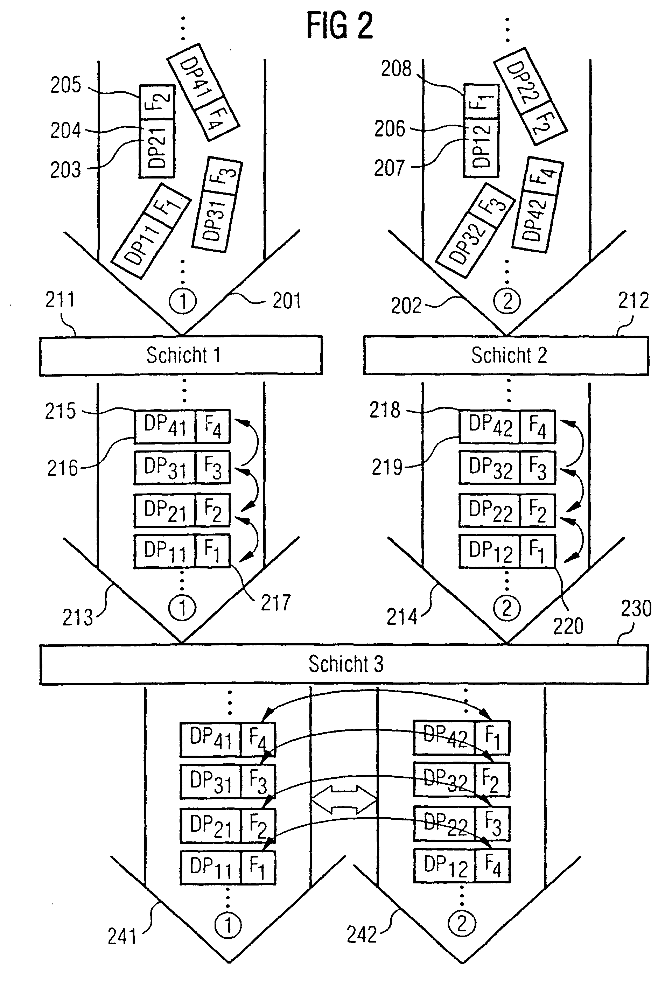

Unter digitalen Datenströmen DS sind im weiteren z. B. folgende keineswegs abschließend zu verstehende Arten digitaler Daten zu verstehen, die üblicherweise in Datenpaketen vorgebbarer Größe, d.h. mit einer vorgebbaren Zahl von Bytes, verarbeitet werden (vgl. Figur 2):
- digitale Daten, mit denen ein Text beschrieben wird TD, z.B. eine Text-Datei,
- Audiodaten AD,
- Videodaten VD, welche die Grundbilddaten und die Zusatzbilddaten umfassen.

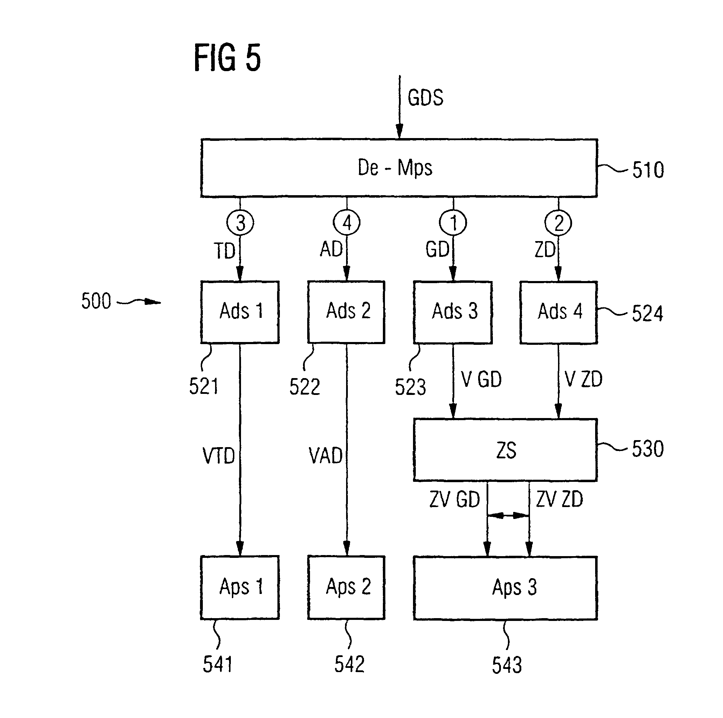

In **Fig.5** ist eine Anordnung zum Empfangen und Bearbeiten von Datenströmen dargestellt, die jeweils in den in Figur 1 dargestellten Anordnungen A1, A2 enthalten ist.

Eine Richtung eines Datenflusses ist symbolhaft durch einen Pfeil dargestellt.

**Fig.5** zeigt einen Gesamtdatenstrom GDS mit Datenpaketen, welcher Gesamtdatenstrom GDS gemäß dem Standart ITU-T H.324, wie er in [1] beschrieben ist, übertragen worden ist.

Die im folgenden beschriebene Bearbeitung der Datenströme wird gemäß dem Standard ITU-T H.324 durchgeführt.

Der Gesamtdatenstrom GDS ist gemäß des Standards ITU-T H.324 strukturiert und umfaßt einen ersten Datenstrom GD mit Datenpaketen, welche die Grundbilddaten von den digitalisierten Videobildern (vgl. **Fig.1**) aufweisen. Ferner umfaßt der Gesamtdatenstrom GDS einen zweiten Datenstrom ZD mit Datenpaketen, welche die Zusatzbilddaten der digitalisierten Videobilder aufweisen. Des weiteren umfaßt der Gesamtdatenstrom einen dritten Datenstrom TD und einen vierten Datenstrom AD, welche die Textdaten und die Audiodaten umfassen.

Der Gesamtdatenstrom GDS wird von einer Demultiplexschicht 510 empfangen. In der Demultiplexschicht 510 wird der Gesamtdatenstrom GDS durch ein Demultiplexen in den ersten Datenstrom GD, zweiten Datenstrom ZD, dritten Datenstrom TD und vierten Datenstrom AD gruppiert. Die Demultiplexschicht 510 überträgt die gruppierten Datenströme GD, ZD, TD und AD getrennt an eine erste 521, zweite 522, dritte 523 und vierte 524 Adaptionsschicht.

Eine Adaptionsschicht ist als Mittel zu verstehen, mit dem eine Maßnahme zur Fehlererkennung und/oder Fehlerkorrektur durchführbar ist.

In [1] ist die eingesetzte Maßnahme zur Fehlererkennung und/oder Fehlerkorrektur, ein sogenanntes Wiederholungs-Anforderungs-Verfahren, beschrieben.

In der Adaptionsschicht 521, 522, 523 und 524 werden die empfangenen Datenstrome GD, ZD, TD und AD jeweils durch das Wiederholungs-Anforderungs-Verfahren fehlerbehandelt. Die Adaptionsschicht 521, 522, 523 und 524 überträgt jeweils den fehlerbehandelten Datenstrom VGD, VZD, VTD und VAD an eine weitere Schicht.

Der fehlerbehandelte dritte Datenstrom VDT, welcher die Textdaten umfaßt, wird an eine erste Applikationsschicht 541 übertragen. Der fehlerbehandelte vierte Datenstrom VAD, welcher die Audiodaten umfaßt, wird an eine zweite Applikationsschicht 542 übertragen. Der Aufbau der ersten und der zweiten Applikationsschicht ist in [2] beschrieben.

In der ersten Applikationsschicht 541 und in der zweiten Applikationsschicht 542 wird der fehlerbehandelte dritte Datenstrom VTD und der fehlerbehandelte vierte Datenstrom VAD derart weiterbearbeitet, daß aus den Textdaten Steuersignale und aus den Audiodaten Audiosignale gebildet werden.

Der fehlerbehandelte erste Datenstrom VGD mit Datenpaketen, welche die Grundbilddaten der digitalisierten Videobilder aufweisen, und der fehlerbehandelte zweite Datenstrom VZD mit Datenpaketen, welche die zugehörigen Zusatzbilddaten der digitalisierten Videobilder aufweisen, werden einer Zuordnungsschicht 530 zugeführt. In der Zuordnungsschicht 530 werden ein Datenpaket des fehlerbehandelten ersten Datenstroms VGD und ein zugehöriges Datenpaket des fehlerbehandelten zweiten Datenstroms VZD einander zugeordnet derart, daß unter Verwendung der Grundbilddaten und der Zusatzbilddaten der zugeordneten Datenpakete ein digitalisiertes Videobild rekonstruierbar ist.

Die Zuordnungsschicht 530 überträgt den zugeordneten ersten Datenstrom ZVGD und den zugeordneten zweiten Datenstrom ZVZD an eine dritte Applikationsschicht 543.

In der dritten Applikationsschicht 543 werden die übertragenen zugeordneten Datenströme ZVGD und ZVZD derart weiterbearbeitet, daß die digitalisierten Videobilder rekonstruiert werden.

In **Fig.2** ist die Bearbeitung des ersten und des zweiten Datenstroms VGD und VZD in der Zuordnungsschicht 530 entsprechend der oben beschriebenen Anordnung (vgl. **Fig.5**) näher dargestellt.

In **Fig. 3** sind Verfahrensschritte, welche entsprechend der **Fig.2** durchgeführt werden, dargestellt.

In einem ersten Schritt 310 werden der erste Datenstrom 201, welcher die Grundbilddaten der digitalisierten Bilder umfaßt, und der zweite Datenstrom 202, welcher die Zusatzbilddaten der digitalisierten Bilder umfaßt, von der dritten Adaptionsschicht 211 und der vierten Adaptionsschicht 212 (vgl. **Fig.5**) empfangen.

Eine Struktur des ersten 201 und des zweiten 202 Datenstroms ist in **Fig.2** symbolhaft dargestellt.

Der erste Datenstrom 201 weist Datenpakete 203 auf, welche jeweils die Grundbilddaten DP11, DP21, DP31 und DP41 204 eines digitalisieren Bildes umfassen. Ferner weisen die Datenpakete 203 jeweils eine sogenannte Paket-Sequenz-Nummer F1,F2, F3 und F4 205 (PSN-Nummer) auf. Die PSN-Nummer F1,F2, F3 und F4 205 wurde den Datenpaketen 203 im Rahmen der Fehlererkennung gemäß des Standards ITU-T H.324 bei der Übertragung zugewiesen.

Der zweite Datenstrom 202 mit Datenpaketen 206, welche jeweils die Zusatzbilddaten DP12, DP22, DP32 und DP42 207 und ebenfalls eine PSN-Nummer F1, F2, F3 und F4 umfassen, weist eine dem ersten Datenstrom 201 entsprechende Struktur auf.

Die Zuweisung der PSN-Nummern zu den Datenpaketen erfolgt derart, daß einem Datenpaket des ersten Datenstroms, das die Grundbilddaten eines ausgewählten digitalisierten Videobildes aufweist, und einem Datenpaket des zweiten Datenstroms, das die zugehörigen Zusatzbilddaten des ausgewählten digitalisierten Videobildes aufweist, jeweils die gleiche PSN-Nummer zugewiesen wird. Somit läßt sich ein digitalisiertes Bild jeweils unter Verwendung der Datenpakete, welche jeweils die gleiche PSN-Nummer aufweisen, rekonstruieren.

In einem zweiten Schritt 320 erfolgt für den empfangenen ersten Datenstrom 201 und für den empfangenen zweiten Datenstrom 202 jeweils die Fehlererkennung und/oder Fehlerkorrektur gemäß dem Standards ITU-T H.324.

In einem dritten Schritt 330 wird der fehlerbehandelte erste Datenstrom 213 an die Zuordnungsschicht 230 übertragen. Der fehlerbehandelte erste Datenstrom 213 wird derart übertragen, daß die Datenpakete 215 des übertragenen fehlerbehandelten ersten Datenstroms weiterhin jeweils die Grundbilddaten DP11, DP21, DP31 und DP41 216 und die PSN-Nummer F1, F2, F3 und F4 217 aufweisen.

Der fehlerbehandelte zweite Datenstrom 214 wird in dem dritten Schritt 330 entsprechend der oben beschriebenen Vorgehensweise für den fehlerbehandelten ersten Datenstrom 213 an die Zuordnungsschicht 230 übertragen. Somit weist der fehlerbehandelte zweite Datenstrom 214 mit den Datenpaketen 218 weiterhin jeweils die Grundbilddaten DP12, DP22, DP32 und DP42 219 und die PSN-Nummer F1, F2, F3 und F4 220 auf.

In einem vierten Schritt 340 erfolgt in der Zuordnungsschicht 230 eine Zuordnung der Datenpakete 215 des fehlerbehandelten ersten Datenstroms 213 zu den zugehörigen Datenpaketen 218 des fehlerbehandelten zweiten Datenstroms 214.

Die Zuordnung erfolgt unter Verwendung der PSN-Nummern 217 der Datenpakete 215 des fehlerbehandelten ersten Datenstroms 213 und der PSN-Nummern 220 der Datenpakete 218 des fehlerbehandelten zweiten Datenstroms 214.

Die Zuordnung der Datenpakete erfolgt derart, daß Datenpakete mit jeweils gleichen PSN-Nummern einander zugeordnet werden.

Somit wird bei der Zuordnung einem Datenpaket 215 des fehlerbehandelten ersten Datenstroms 213 mit einer bestimmten PSN-Nummer 217 das zugehörige Datenpaket 218 des fehlerbehandelten zweiten Datenstroms 214 zugeordnet, welches die gleiche PSN-Nummer 220 wie das Datenpaket 215 des fehlerbehandelten ersten Datenstroms 213 aufweist.

Die Zuordnungsschicht 230 überträgt die einander zugeordneten ersten 241 und zweiten 242 Datenströme an die entsprechende Applikationsschicht (vgl. **Fig.5**).

In diesem Dokument wurden folgende Veröffentlichungen zitiert:
[1] N. Färber, et al., "Extension of ITU-T Recommendation H.223 for Error-Resilient Video Transmision", IEEE Communication Magazine, S. 120-128, Juni 1998
[2] ITU-T Draft Recommendation H.223, International Telecommunication Union, Telecommunication Standardization Sector, August 1996
[3] ITU Draft 21 of the Recommendation H.263, Version 2, Transmission of Non-Telefon-Signals: Video-Coding for Low Bit Rate Communication, Februar 1998
[4] WO 98/21846

## Patentansprüche

1. Verfahren zum Bearbeiten eines Gesamtdatenstroms (GDS) mit Datenpaketen (203) eines ersten Datenstroms (201) und Datenpaketen (206) eines zweiten Datenstroms (202),
- bei dem die Datenpakete jeweils ein Fehlererkennungsfeld (205) aufweisen,
- bei dem der Gesamtdatenstrom von einer ersten Schicht (211) empfangen wird,
- bei dem in der ersten Schicht der empfangene Gesamtdatenstrom derart bearbeitet wird, daß unter Verwendung jeweils eines Fehlererkennungsfeldes eines Datenpakets eine Fehlererkennung für das Datenpaket durchgeführt wird,
**dadurch gekennzeichnet,**
- **dass** bei dem von der ersten Schicht eine Information über ein Fehlererkennungsfeld eines Datenpakets des bearbeiteten Gesamtdatenstroms und zumindest ein Teil des bearbeiteten Gesamtdatenstroms an eine zweite Schicht (212) übertragen wird,
- **dass** bei dem in der zweiten Schicht unter Verwendung der Informationen über das Fehlererkennungsfeld die Datenpakete des übertragenen Teils des Gesamtdatenstroms dem ersten Datenstrom und dem zweiten Datenstrom zugeordnet werden.

2. Verfahren nach Anspruch 1,
bei dem der Gesamtdatenstrom unter Verwendung eines Verfahrens, das Merkmale eines ITU-T H.324-Verfahrens aufweist, übertragen wird.

3. Verfahren nach Anspruch 1 oder 2,
bei dem die Information über ein Fehlererkennungsfeld das Fehlererkennungsfeld sellst ist.

4. Verfahren nach einem der Ansprüche 1 bis 3,
bei dem ein Fehlererkennungsfeld jeweils eine Sequenzfolgenummer (F1) aufweist.

5. Verfahren nach Anspruch 4,
bei dem mehrere Datenpakete die gleiche Sequenzfolgenummer aufweisen und die Datenpakete mit jeweils der gleichen Sequenzfolgenummer gruppiert werden.

6. Verfahren nach einem der Ansprüche 1 bis 5,
bei dem der erste und der zweite Datenstrom jeweils zumindest einen Teil folgender Arten von Daten umfassen:
- Videodaten
- Audiodaten
- Textdaten.

7. Verfahren nach Anspruch 6,
bei dem der erste Datenstrom und der zweite Datenstrom die gleiche Art von Daten aufweisen.

8. Anordnung zum Bearbeiten eines Gesamtdatenstroms mit Datenpaketen eines ersten Datenstroms (201) und Datenpaketen eines zweiten Datenstroms (202) welche Datenpakete jeweils ein Fehlererkennungsfeld (205) aufweisen,
- mit einer ersten Schicht (211) unit welcher der Gesamtdatenstrom empfangbar ist und mit welcher der empfangene Gesamtdatenstrom derart bearbeitbar ist, daß unter Verwendung jeweils eines Fehlererkennungsfeldes eines Datenpakets eine Fehlererkennung für das Datenpaket durchführbar ist,
**dadurch gekennzeichnet, dass**
- von der ersten Schicht eine Information über ein Fehlererkennungsfeld eines Datenpakets des bearbeiteten Gesamtdatenstroms und zumindest ein Teil des bearbeiteten Gesamtdatenstroms an eine zweite Schicht (212) ubertragbar sind, und
- mit der zweiten Schicht, mit welcher unter Verwendung der Informationen über das Fehlererkennungsfeld die Datenpakete des übertragenen Teils des Gesamtdatenstroms dem ersten Datenstrom und dem zweiten Datenstrom zuordnbar sind.

9. Anordnung nach Anspruch 8,
bei der die Information über ein Fehlererkennungsfeld das Fehlererkennungsfeld sellst ist.

10. Anordnung nach Anspruch 8 oder 9,
bei der ein Fehlererkennungsfeld jeweils eine Sequenzfolgenummer (F1) aufweist.

11. Anordnung nach Anspruch 10,
bei der mehrere Datenpakete die gleiche Sequenzfolgenummer aufweisen und die Datenpakete mit jeweils der gleichen Sequenzfolgenummer gruppierbar sind.

12. Anordnung nach einem der Ansprüche 8 bis 11,
die derart eingerichtet ist, daß der erste Datenstrom und der zweite Datenstrom jeweils zumindest einen Teil folgender Arten von Daten umfassen:
- Videodaten
- Audiodaten
- Textdaten.

13. Anordnung nach Anspruch 12,
die derart eingerichtet ist, daß der erste Datenstrom und der zweite Datenstrom die gleiche Art von Daten aufweisen.

## Claims

1. Method for processing an entire data stream (GDS) having data packets (203) in a first data stream (201) and data packets (206) in a second data stream (202),
- in which the data packets each have an error identification field (205)
- in which the entire data stream is received by a first layer (211)
- in which the received entire data stream is processed in the first layer such that error identification for the data packet is carried out using an error identification field in each data packet,
**characterized**
- **in that** in which information about an error identification field in a data packet in the processed entire data stream and at least a portion of the processed entire data stream is transmitted from the first layer to a second layer (212), and
- **in that** in which the data packets in the transmitted portion of the entire data stream are associated with the first data stream and the second data stream in the second layer, using the information about the error identification field.

2. Method according to Claim 1,
in which the entire data stream is transmitted using a method which has the features of an ITU-T H.324 method.

3. Method according to Claim 1 or 2,
in which the information about an error identification field is the error identification field itself.

4. Method according to one of Claims 1 to 3,
in which an error identification field in each case has a sequence number (F1).

5. Method according to Claim 4,
in which a number of data packets have the same sequence number, and the data packets which each have the same sequence number are grouped.

6. Method according to one of Claims 1 to 5,
in which the first and the second data stream each comprise at least some of the following types of data:
- video data
- audio data
- text data.

7. Method according to Claim 6,
in which the first data stream and the second data stream have the same type of data.

8. Arrangement for processing an entire data stream having data packets in a first data stream (201) and data packets in a second data stream (202), which data packets each have an error identification field (205),
- having a first layer (211) by means of which the entire data stream can be received and by means of which the received entire data stream is processed in such a manner that error identification for the data packet can be carried out using in each case one error identification field of a data packet,
**characterized in that**
- information about an error identification field in a data packet in the processed entire data stream and at least a portion of the processed entire data stream can be transmitted from the first layer to a second layer (212), and
- having the second layer, by means of which the data packets in the transmitted portion of the entire data stream can be associated with the first data stream and the second data stream using the information about the error identification field.

9. Arrangement according to Claim 8,
in which the information about an error identification field is the error identification field itself.

10. Arrangement according to Claim 8 or 9,
in which an error identification field in each case has a sequence number (F1).

11. Arrangement according to Claim 10,
in which a number of data packets have the same sequence number, and the data packets which each have the same sequence number are grouped.

12. Arrangement according to one of Claims 8 to 11,
which is set up such that the first data stream and the second data stream each comprise at least a portion of the following types of data:
- video data
- audio data
- text data.

13. Arrangement according to Claim 12,
which is set up such that the first data stream and the second data stream have the same type of data.

## Revendications

1. Procédé pour traiter un flux global de données (GDS) comprenant des paquets de données (203) d'un premier flux de données (201) et des paquets de données (206) d'un deuxième flux de données (202),
- dans lequel les paquets de données présentent respectivement un champ de détection d'erreurs (205),
- dans lequel le flux global de données est reçu par une première couche (211 ),
- dans lequel il y a un traitement dans la première couche du flux global de données reçu, de telle manière qu'en utilisant respectivement un champ de détection d'erreurs d'un paquet de données, une détection d'erreurs est exécutée pour le paquet de données,
**caractérisé en ce**
- qu'une information sur un champ de détection d'erreurs d'un paquet de données du flux global de données traité et au moins une partie du flux global de données traité sont transmises à une deuxième couche (212) par la première couche,
- que les paquets de données de la partie transmise du flux global de données sont affectés au premier flux de données et au deuxième flux de données dans la deuxième couche par l'intermédiaire du champ de détection d'erreurs en utilisant les informations.

2. Procédé selon la revendication 1
dans lequel le flux global de données est transmis en utilisant un procédé présentant les caractéristiques d'un procédé ITU-T H.324.

3. Procédé selon la revendication 1 ou 2,
dans lequel l'information sur un champ de détection d'erreurs est le champ de détection d'erreurs lui-même.

4. Procédé selon l'une quelconque des revendications 1 à 3,
dans lequel un champ de détection d'erreurs présente respectivement un numéro de séquence (F1).

5. Procédé selon la revendication 4,
dans lequel plusieurs paquets de données présentent le même numéro de séquence et les paquets de données sont groupés avec respectivement le même numéro de séquence.

6. Procédé selon l'une quelconque des revendications 1 à 5,
dans lequel le premier et le deuxième flux de données comprennent chacun au moins une partie de types suivants de données :
- données vidéo
- données audio
- données de texte

7. Procédé selon la revendication 6,
dans lequel le premier flux de données et le deuxième flux de données présentent le même type de données.

8. Dispositif pour le traitement d'un flux global de données comprenant des paquets de données d'un premier flux de données (201) et des paquets de données d'un deuxième flux de données (202), lesquels paquets de données présentent respectivement un champ de détection d'erreurs (205)
- comprenant une première couche (211) au moyen de laquelle le flux global de données peut être reçu et au moyen de laquelle le flux global de données reçu peut être traité, de telle manière qu'une détection d'erreurs pour le paquet de données est exécutable en utilisant respectivement un champ de détection d'erreurs d'un paquet de données,
**caractérisé en ce que**
- une information sur un champ de détection d'erreurs d'un paquet de données du flux global de données traité et au moins une partie du flux global de données traité peuvent être transmises à une deuxième couche (212) par la première couche, et
- comprenant la deuxième couche, au moyen de laquelle les paquets de données de la partie transmise du flux global de données peuvent être affectés au premier flux de données et au deuxième flux de données par l'intermédiaire du champ de détection d'erreurs en utilisant les informations.

9. Dispositif selon la revendication 8,
dans lequel l'information sur un champ de détection d'erreurs est le champ de détection d'erreurs lui-même.

10. Dispositif selon la revendication 8 ou 9,
dans lequel un champ de détection d'erreurs présente respectivement un numéro de séquence (F1).

11. Dispositif selon la revendication 10,
dans lequel plusieurs paquets de données présentent le même numéro de séquence et les paquets de données peuvent être groupés avec respectivement le même numéro de séquence.

12. Dispositif selon l'une quelconque des revendications 8 à 11,
qui est conçu de telle manière que le premier flux de données et le deuxième flux de données comprennent chacun au moins une partie des types suivants de données :
- données vidéo
- données audio
- données de texte

13. Dispositif selon la revendication 12,
qui est conçu de telle manière que le premier flux de données et le deuxième flux de données présentent le même type de données.
